# EUROPÄISCHE PATENTSCHRIFT

(11) **EP 3 271 367 B1**
(45) Veröffentlichungstag und Bekanntmachung des Hinweises auf die Patenterteilung: **30.01.2019**
(21) Anmeldenummer: 16711802.5
(22) Anmeldetag: 16.03.2016
(51) Int. Cl.: C07F 7/18, C08L 83/04, C08K 5/5455

(54) **SILANE UND HÄRTBARE ZUSAMMENSETZUNGEN, DIE DIESE SILANE ALS VERNETZER ENTHALTEN**
SILANES AND CURABLE COMPOSITIONS WHICH CONTAIN SAID SILANES AS CROSS-LINKING AGENTS
SILANES ET COMPOSITIONS DURCISSABLES CONTENANT CES SILANES EN TANT QUE RÉTICULANTS

(30) Priorität: 17.03.2015 DE 102015204788
(43) Veröffentlichungstag der Anmeldung: 24.01.2018
(73) Patentinhaber: Henkel AG & Co. KGaA, 40589 Düsseldorf (DE)
(72) Erfinder: GUTACKER, Andrea, 40597 Düsseldorf (DE); KLEIN, Johann, 40593 Düsseldorf (DE)
(86) Internationale Anmeldenummer: PCT/EP2016/055693
(87) Internationale Veröffentlichungsnummer: WO 2016/146685

(56) Entgegenhaltungen:
- US-A1- 2012 016 072
- RUNTANG WANG ET AL: "[beta]-Lactam-Forming Photochemical Reactions of N -Trimethylsilylmethyl- and N -Tributylstannylmethyl-Substituted [alpha]-Ketoamides", THE JOURNAL OF ORGANIC CHEMISTRY, Bd. 69, Nr. 4, 1. Februar 2004 (2004-02-01), Seiten 1215-1220, XP055276154, US ISSN: 0022-3263, DOI: 10.1021/jo030343q

## Beschreibung

Die Erfindung betrifft neue Silane, die mindestens einen speziellen α-Hydroxycarbonsäureamid-Rest enthalten, deren Herstellung, sowie härtbare Zusammensetzungen die das Silan und ein härtbares Polyorganosiloxan enthalten. Das Silan fungiert in den härtbaren Zusammensetzungen als Vernetzer und zeichnet sich insbesondere durch eine ausgezeichnete Stabilität auch bei längerer Lagerung im Gemisch mit üblichen weiteren Bestandteilen härtbarer Zusammensetzungen aus.

Silikonpolymere (Polyorganosiloxane), insbesondere Polydialkylsiloxane wie Polydimethylsiloxan (PDMS), haben große Bedeutung bei der Herstellung von Kleb-, Dicht-, Beschichtungs- und Isolierstoffen. Unter diesen machen solche, die bei niedrigen Temperaturen und unter Umgebungsbedingungen vulkanisieren, einen nicht unerheblichen Marktanteil aus. Typische Formulierungen enthalten ein reaktives Polyorganosiloxan. Dabei handelt es sich in der Regel um ein Silanol-terminiertes Polyorganosiloxan, wobei das Polyorganosiloxan mindestens eine, vorzugsweise zwei, an ein Siliziumatom gebundene Hydroxygruppen aufweist. Dieses wird in Kombination mit einem Vernetzer auf Silanbasis eingesetzt, der an das Siliziumatom gebundene hydrolysierbare Gruppen aufweist. Statt von Vernetzer wird gelegentlich auch von Härter gesprochen. Im Sinne dieser Anmeldung sind die Begriffe Vernetzer und Härter gleichbedeutend. Das Polyorganosiloxan und der Vernetzer können als separate Komponenten vorliegen. Oftmals wird jedoch das Polyorganosiloxan gezielt mit dem Vernetzer zu einem modifizierten Polyorganosiloxan umgesetzt, und dieses modifizierte Polyorganosiloxan der härtbaren Zusammensetzung zugegeben. Man spricht in diesem Zusammenhang auch von Endgruppenverkappung (endcapping). Diese kann gegebenenfalls in Gegenwart eines Katalysators durchgeführt werden, wobei dieser selektiv die Endgruppenverkappung vermitteln soll ohne gleichzeitig das Polyorganosiloxan zu härten.

Es sind zahlreiche Vernetzer für Silikonsysteme bekannt. Diese lassen sich anhand der bei der Hydrolyse freigesetzten Austrittsgruppen in saure, basische und neutrale Vernetzter unterscheiden. Typische saure Vernetzer enthalten als hydrolysierbare Gruppen Säuregruppen und setzen bei der Vernetzung die korrespondierenden Säuren, z.B. Essigsäure, frei. Typische basische Vernetzer setzen bei der Vernetzung Amine frei. In beiden Fällen werden bei der Vernetzung aggressive Verbindungen freigesetzt, die z.B. Metalle, Stein oder Mörtel korrodieren oder zersetzen können, und die zudem einen intensiven, oftmals unangenehmen Geruch besitzen. Daher werden für moderne härtbare Silikonzusammensetzungen häufig neutrale Vernetzer verwendet. Typische Vertreter neutraler Vernetzer weisen hydrolysierbare Gruppen auf, die bei der Vernetzung Alkohol oder Oxim abspalten. Alkoxysysteme haben allerdings den Nachteil, dass vielfach Probleme bei der Lagerstabilität entsprechender härtbarer Zusammensetzungen auftreten und die ausgehärteten Produkte auf einigen Materialien nur schlechte Haftung aufweisen. Oximosilan-Vernetzer, die unter Abgabe eines Alkanonoxims hydrolysieren, weisen diese Nachteile in der Regel nicht auf und kommen daher vielfach zum Einsatz. Der gebräuchlichste Vertreter der Oximosilan-Vernetzer setzt beim Vernetzen Butan-2-onoxim frei. Dieses steht in Verdacht Krebs zu erzeugen, so dass dringend Bedarf an alternativen neutralen Vernetzern besteht. Im Übrigen besitzen auch die freigesetzten Oxime einen intensiven, üblen Geruch und das Arbeiten mit härtbaren Zusammensetzungen, die einen entsprechenden Vernetzer enthalten, wird von den Anwendern als unangenehm empfunden.

Als alternative Vernetzer wurden daher bereits Silanverbindungen vorgeschlagen, die beim Vernetzen α-Hydroxycarbonsäureester oder α-Hydroxycarbonsäureamide freisetzen.

Die Herstellung geeigneter Silanverbindungen ist lange bekannt und beispielsweise von M. M. Sprung in "Some α-Carbalkoxyalkoxysilanes", J. Org. Chem., 1958, 23 (10), Seiten 1530-1534, oder von Runtang Wang in "[beta]-Lactam-Forming Photochemical Reactions of N -Trimethylsilylmethyl- and N -Tributylstannylmethyl-Substituted [alpha]-Ketoamides", J. Org. Chem. 2004, 69(4), Seiten 1215-1220, beschrieben.

Auch DE 32 10 337 A1 offenbart entsprechende Silanverbindungen, deren Herstellung und Verwendung in härtbaren Zusammensetzungen auf Basis von Polydiorganosiloxanen, die kondensationsfähige Endgruppen aufweisen.

Aus EP 2 030 976 A1 sind Härter für Silikonkautschukmassen bekannt, die drei 2-Hydroxyproprionsäurealkylester-Reste, d.h. Milchsäurealkylester-Reste, aufweisen. Besonders bevorzugt ist dabei das Vinyl-tris(ethyllactato)silan.

EP 2 774 672 A1 beschreibt spezielle Katalysatoren für die Vernetzung von Silikonkautschukmassen mit einem Vernetzer auf Basis einer Silanverbindung mit Lactatgruppen. Bei dem Vernetzer kann es sich wiederum um die aus EP 2 030 976 A1 bekannten Verbindungen handeln. Es werden jedoch auch Vernetzer offenbart, die nur einen, zwei oder auch vier 2-Hydroxyproprionsäurealkylester-Reste aufweisen.

Obwohl der Einsatz eines Vernetzers auf Basis einer Silanverbindung mit Lactatgruppen oder ähnlichen α-Carbalkoxyalkoxygruppen viele Vorteile mit sich bringt, haben sich diese Vernetzer in der Praxis noch nicht durchsetzen können. Dies liegt insbesondere an der Schwierigkeit, härtbare Zusammensetzungen auf Silikonbasis, die diese Vernetzer enthalten, so zu formulieren, dass eine hinreichende Lagerstabilität erzielt wird. Gerade in Gegenwart anderer üblicher und vielfach unverzichtbarer Bestandteile solcher Zusammensetzungen, insbesondere von Härtungskatalysatoren und Haftvermittlern, leidet die Stabilität der Silanverbindung und damit die Lagerstabilität der härtbaren Zusammensetzungen drastisch.

Es ist daher eine Aufgabe der vorliegenden Erfindung, neue Silanverbindungen zur Verfügung zu stellen, die als neutrale Vernetzer in härtbaren Zusammensetzungen auf Basis von Polyorganosiloxanen eingesetzt werden können, ohne die Lagerstabilität der härtbaren Zusammensetzungen negativ zu beeinflussen.

Die vorliegende Erfindung löst die Aufgabe durch Bereitstellung der erfindungsgemäßen Silanverbindungen, die mindestens einen speziellen α-Hydroxycarbonsäureamid-Rest aufweisen.

Gegenstand der Erfindung sind daher Silane der Formel (1),

Si(R¹)ₘ(R²)ₙ(R³)₄₋₍ₘ₊ₙ₎ (1)

wobei
jedes R¹ unabhängig steht für:
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest;
jedes R² unabhängig steht für einen Rest der allgemeinen Formel (2): 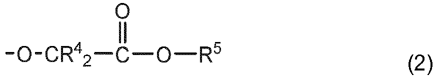 wobei
jedes R⁴ unabhängig steht für:
Wasserstoff; oder
einen substituierten oder unsubstituierten Alkyl-, Alkenyl- oder Alkinylrest;
R⁵ steht für:
einen substituierten oder unsubstituierten Alkyl-, Alkenyl- oder Alkinylrest;
für einen Rest der allgemeinen Formel (2-2):

-OR⁵⁻² (2-2)

wobei
R⁵⁻² steht für:
einen substituierten oder unsubstituierten Alkyl-, Alkenyl- oder Alkinylrest;
oder für einen Rest der allgemeinen Formel (2-3): 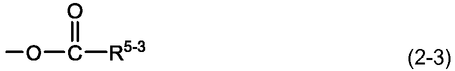 wobei
R⁵⁻³ steht für:
einen substituierten oder unsubstituierten Alkyl-, Alkenyl- oder Alkinylrest;
jedes R³ unabhängig steht für einen Rest der allgemeinen Formel (3): 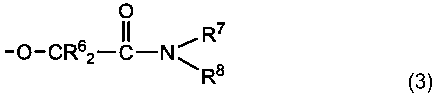 wobei
jedes R⁶ unabhängig steht für:
Wasserstoff oder
einen substituierten oder unsubstituierten Alkyl-, Alkenyl- oder Alkinylrest;
R⁷ steht für:
Wasserstoff,
einen substituierten oder unsubstituierten Alkyl-, Alkenyl- oder Alkinylrest,
einen substituierten oder unsubstituierten cycloaliphatischen Rest oder Arylrest,
für R⁸, oder
einen Rest -(CH₂)_{q}-COOR⁹, wobei q eine ganze Zahl von 2 bis 10, insbesondere 2 ist und R⁹ für einen substituierten oder unsubstituierten Alkyl-, Alkenyl- oder Alkinylrest, oder einen substituierten oder unsubstituierten cycloaliphatischen Rest oder Arylrest steht;
R⁸ steht für einen Rest der allgemeinen Formel (4):

-R¹⁰-SiR¹¹ₒ(OR¹²)₃₋ₒ (4)

wobei
R¹⁰ steht für:
einen, gegebenenfalls durch ein Heteroatom unterbrochenen Alkylenrest;
jedes R¹¹ unabhängig steht für:
einen substituierten oder unsubstituierten Alkyl-, Alkenyl- oder Alkinylrest;
jedes R¹² unabhängig steht für:
einen substituierten oder unsubstituierten Alkyl-, Alkenyl- oder Alkinylrest,
einen Acylrest; und
oder einen Rest der Formel (5): 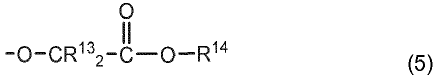
wobei
jedes R¹³ unabhängig steht für:
Wasserstoff; oder
einen substituierten oder unsubstituierten Alkyl-, Alkenyl- oder Alkinylrest;
R¹⁴ steht für:
einen substituierten oder unsubstituierten Alkyl-, Alkenyl- oder Alkinylrest; und o unabhängig für 0, 1 oder 2 steht, und
m unabhängig für 0 oder 1 und n unabhängig für 0, 1, 2 oder 3 steht, wobei die Summe n + m maximal 3 beträgt.

Ein weiterer Gegenstand der Erfindung ist ein Verfahren zur Herstellung der erfindungsgemäßen Silane.

Die Erfindung betrifft ferner härtbare Zusammensetzungen, enthaltend mindestens ein erfindungsgemäßes Silan und mindestens ein Polyorganosiloxan, wobei das Polyorganosiloxan mindestens eine, an ein Siliziumatom gebundene, Hydroxygruppe aufweist.

Unter einer "härtbaren Zusammensetzung" wird ein Stoff oder eine Mischung aus mehreren Stoffen verstanden, der beziehungsweise die durch physikalische oder chemische Maßnahmen härtbar ist. Dabei können diese chemischen oder physikalischen Maßnahmen beispielsweise in der Zuführung von Energie in Form von Wärme, Licht oder sonstiger elektromagnetischer Strahlung, aber auch in einfachster Inkontaktbringung mit Luftfeuchtigkeit, Wasser oder einer reaktiven Komponente bestehen. Die Zusammensetzung geht dabei vom Ausgangszustand in einen Zustand über, der höhere Härte aufweist.

Sofern in der vorliegenden Anmeldung auf Molekulargewichte von Oligomeren oder Polymeren Bezug genommen wird, beziehen sich die Angaben, sofern nicht anders angegeben, auf das Gewichtsmittel, d.h. den M_{w}-Wert, und nicht das arithmetische Mittel. Das Molekulargewicht wird mittels Gelpermeationschromatographie (GPC) mit Tetrahydrofuran (THF) als Eluent nach DIN 55672-1:2007-08 bestimmt, vorzugsweise bei 35 °C. Molekulargewichte von monomeren Verbindungen werden unter Zugrundelegung der jeweiligen Summenformel und der bekannten Molekulargewichte der einzelnen Atome berechnet.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Alkyl", wie hierin verwendet, bezieht sich auf einen gesättigten aliphatischen Kohlenwasserstoff einschließlich geradkettiger und verzweigtkettiger Gruppen. Vorzugsweise besitzt die Alkylgruppe 1 bis 10 Kohlenstoffatome (wenn ein numerischer Bereich z.B. "1-10" hierin angegeben wird, ist gemeint, dass diese Gruppe, in diesem Fall die Alkylgruppe, 1 Kohlenstoffatom, 2 Kohlenstoffatome, 3 Kohlenstoffatome etc. bis zu einschließlich 10 Kohlenstoffatome besitzen kann). Insbesondere kann es sich bei dem Alkyl um ein mittleres Alkyl, das 5 bis 6 Kohlenstoffatome besitzt, oder ein Niederalkyl, das 1 bis 4 Kohlenstoffatome besitzt z.B. Methyl, Ethyl, n-Propyl, Isopropyl, Butyl, iso-Butyl, tert-Butyl etc., handeln. Die Alkylreste können substituiert oder unsubstituiert sein. "Substituiert", wie in diesem Zusammenhang verwendet, bedeutet, dass ein oder mehrere Kohlenstoffatom(e) und/oder Wasserstoffatom(e) des Alkylrests durch Heteroatome oder funktionelle Gruppen ersetzt sind. Durch das Ersetzen eines oder mehrerer Kohlenstoffatome durch Heteroatome werden Heteroalkylgruppen erhalten, in denen 1 oder mehrere Kohlenstoffatome durch Heteroatome, insbesondere ausgewählt aus O, S, N und Si, ersetzt sind. Beispiele für solche Heteroalkylgruppen sind, ohne Einschränkung, Methoxymethyl, Ethoxyethyl, Propoxypropyl, Methoxyethyl, Isopentoxypropyl, Ethylaminoethyl, Trimethoxypropylsilyl, etc. Funktionelle Gruppen, die Wasserstoffatome ersetzen können, werden insbesondere ausgewählt aus =O, =S, -OH, -SH, -NH₂ -NO₂, -CN, -F, -Cl, -Br, -I, -OCN, -NCO, C₃-₈ Cycloalkyl, C₆-₁₄Aryl, einem 5-10 gliedrigen Heteroarylring, in dem 1 bis 4 Ringatome unabhängig Stickstoff, Sauerstoff oder Schwefel sind, und einem 5-10 gliedrigen heteroalicyclischen Ring, in dem 1 bis 3 Ringatome unabhängig Stickstoff, Sauerstoff oder Schwefel sind.

"Alkenyl", wie hierin verwendet, bezieht sich auf eine Alkylgruppe, wie hierin definiert, die aus mindestens zwei Kohlenstoffatomen und mindestens einer Kohlenstoff-Kohlenstoff-Doppelbindung besteht, z.B. Ethenyl, Propenyl, Butenyl oder Pentenyl und deren strukturelle Isomere wie 1- oder 2-Propenyl, 1-, 2-, oder 3-Butenyl, etc. Alkenylgruppen können substituiert oder unsubstituiert sein. Wenn sie substituiert sind, sind die Substituenten wie oben für Alkyl definiert.

"Alkinyl", wie hierin verwendet, bezieht sich auf eine Alkylgruppe, wie hierin definiert, die aus mindestens zwei Kohlenstoffatomen und mindestens einer Kohlenstoff-Kohlenstoff-Dreifachbindung besteht, z. B. Ethinyl (Acetylen), Propinyl, Butinyl oder Petinyl und deren strukturelle Isomere wie oben beschrieben. Alkinylgruppen können substituiert oder unsubstituiert sein. Wenn sie substituiert sind, sind die Substituenten wie oben für Alkyl definiert.

Ein "cycloaliphatischer Rest" oder "Cycloalkylgruppe", wie hierin verwendet, bezieht sich auf monocyclische oder polycyclische (mehrere Ringe, die gemeinsame Kohlenstoffatome besitzen) Gruppen, insbesondere aus 3-8 Kohlenstoffatomen, in denen der Ring kein vollständiges konjugiertes pi-Elektronensystem besitzt, z.B. Cyclopropyl, Cyclobutyl, Cyclopentyl, Cyclohexyl, Cyclobutenyl, Cyclopentenyl, Cyclohexenyl, etc. Cycloalkylgruppen können substituiert oder unsubstituiert sein. "Substituiert", wie in diesem Zusammenhang verwendet, bedeutet, dass ein oder mehrere Wasserstoffatom(e) des Cycloalkylrests durch funktionelle Gruppen ersetzt sind. Funktionelle Gruppen, die Wasserstoffatome ersetzen können, werden insbesondere ausgewählt aus =O, =S, -OH, -SH, -NH₂ -NO₂, -CN, -F, -Cl, -Br, -I, -OCN, -NCO, C₁-₁₀ Alkyl, C₂₋₁₀ Alkenyl, C₂₋₁₀ Alkinyl, C₃-₈ Cycloalkyl, C₆-₁₄Aryl, einem 5-10 gliedrigen Heteroarylring in dem 1 bis 4 Ringatome unabhängig Stickstoff, Sauerstoff oder Schwefel sind, und einem 5-10 gliedrigen heteroalicyclischen Ring in dem 1 bis 3 Ringatome unabhängig Stickstoff, Sauerstoff oder Schwefel sind.

"Aryl", wie hierin verwendet, bezieht sich auf monocyclische oder polycyclische (d.h. Ringe, die benachbarte Kohlenstoffatompaare gemeinsam haben) Gruppen, aus insbesondere 6 bis 14 Kohlenstoffringatomen die ein vollständiges konjugiertes pi-Elektronensystem besitzen. Beispiele für Arylgruppen sind Phenyl, Naphthalinyl und Anthracenyl. Arylgruppen können substituiert oder unsubstituiert sein. Wenn sie substituiert sind, sind die Substituenten wie oben für Cycloalkyl definiert.

Eine "Heteroaryl"-Gruppe, wie hierin verwendet, bezieht sich auf einen monocyclischen oder polycyclische (d.h. Ringe, die sich ein benachbartes Ringatompaar teilen) aromatischen Ring, aus insbesondere 5 bis 10 Ringatomen, wobei ein, zwei, drei oder vier Ringatome Stickstoff, Sauerstoff oder Schwefel sind und der Rest Kohlenstoff ist. Beispiele für Heteroarylgruppen sind Pyridyl, Pyrrolyl, Furyl, Thienyl, Imidazolyl, Oxazolyl, Isoxazolyl, Thiazolyl, Isothiazolyl, Pyrazolyl, 1,2,3-Triazolyl, 1,2,4-Triazolyl, 1,2,3-Oxadiazolyl, 1,2,4-Oxadiazolyl, 1,2,5-Oxadiazolyl, 1,3,4-Oxadiazolyl, 1,3,4-Triazinyl, 1,2,3-Triazinyl, Benzofuryl, Isobenzofuryl, Benzothienyl, Benzotriazolyl, Isobenzothienyl, Indolyl, Isoindolyl, 3H-Indolyl, Benzimidazolyl, Benzothiazolyl, Benzoxazolyl, Chinolizinyl, Chinazolinyl, Pthalazinyl, Chinoxalinyl, Cinnolinyl, Napthyridinyl, Chinolyl, Isochinolyl, Tetrazolyl, 5,6,7,8-Tetrahydrochinolyl, 5, 6, 7, 8-Tetrahydroisochinolyl, Purinyl, Pteridinyl, Pyridinyl, Pyrimidinyl, Carbazolyl, Xanthenyl oder Benzochinolyl. Heteroarylgruppen können substituiert oder unsubstituiert sein. Wenn sie substituiert sind, sind die Substituenten wie oben für Cycloalkyl definiert.

Ein "heteroalicyclischer Rest" oder eine "Heterocycloalkylgruppe", wie hierin verwendet, bezieht sich auf einen monocyclischen oder fusionierten Ring aus 5 bis 10 Ringatomen, der ein, zwei oder drei Heteroatome enthält, die aus N, O und S ausgewählt werden, wobei der Rest der Ringatome Kohlenstoff ist. Eine "Heterocycloalkenyl"-Gruppe enthält zusätzlich ein oder mehrere Doppelbindungen. Der Ring hat jedoch kein vollständiges konjugiertes pi-Elektronensystem. Beispiele für heteroalicyclische Gruppen sind Pyrrolidin, Piperidin, Piperazin, Morpholin, Imidazolidin, Tetrahydropyridazin, Tetrahydrofuran, Thiomorpholin, Tetrahydropyridin, und ähnliche. Heterocycloalkylgruppen können substituiert oder unsubstituiert sein. Wenn sie substituiert sind, sind die Substituenten wie oben für Cycloalkyl definiert.

Die erfindungsgemäßen Silane sind Silane der Formel (1):

Si(R¹)ₘ(R²)ₙ(R³)₄₋₍ₘ₊ₙ₎ (1).

Dabei steht jedes R¹ unabhängig für einen substituierten oder unsubstituierten Alkyl-, Alkenyl- oder Alkinylrest; einen substituierten oder unsubstituierten cycloaliphatischen Rest oder Arylrest; oder einen substituierten oder unsubstituierten heteroalicyclischen Rest oder Heteroarylrest.

Vorzugsweise steht jedes R¹ unabhängig voneinander für einen Alkylrest mit 1 bis 10 Kohlenstoffatomen, vorzugsweise mit 1 bis 4 Kohlenstoffatomen, insbesondere Methyl, Ethyl, Propyl oder Isopropyl, für einen Alkenylrest mit 2 bis 10 Kohlenstoffatomen, vorzugsweise 2 bis 4 Kohlenstoffatomen, insbesondere Vinyl oder Allyl, oder einen Arylrest mit 6 bis 10 Kohlenstoffatomen, insbesondere Phenyl.

Besonders bevorzugt steht R¹ unabhängig voneinander für Methyl, Vinyl oder Phenyl, ganz besonders bevorzugt für Methyl oder Vinyl.

In Formel (1) steht jedes R² unabhängig voneinander für einen Rest der allgemeinen Formel (2):

-OCR⁴₂COOR⁵ (2),

wobei
jedes R⁴ unabhängig steht für:
Wasserstoff; oder
einen substituierten oder unsubstituierten Alkyl-, Alkenyl- oder Alkinylrest; und
R⁵ steht für:
einen substituierten oder unsubstituierten Alkyl-, Alkenyl- oder Alkinylrest,
für einen Rest der allgemeinen Formel (2-2):

-OR⁵⁻² (2-2)

wobei
R⁵⁻² steht für:
einen substituierten oder unsubstituierten Alkyl-, Alkenyl- oder Alkinylrest;
oder für einen Rest der allgemeinen Formel (2-3): 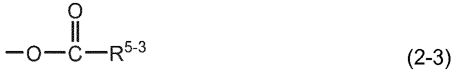 wobei
R⁵⁻³ steht für:
einen substituierten oder unsubstituierten Alkyl-, Alkenyl- oder Alkinylrest.

Mit anderen Worten handelt es sich bei R² um einen α-Hydroxycarbonsäureester-Rest, einen Alkoxyrest oder einen Acyloxyrest.

Vorzugsweise steht jedes R² unabhängig voneinander für einen Rest der Formel (2), wobei einer der Reste R⁴ für Wasserstoff und der zweite der Reste R⁴ für Wasserstoff oder einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, insbesondere Methyl, steht und/oder, vorzugsweise und, R⁵ für einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, besonders bevorzugt Methyl oder Ethyl, steht.

Besonders bevorzugt steht jedes R² unabhängig voneinander für einen Rest der Formel (2), wobei einer der Reste R⁴ für Wasserstoff und der zweite der Reste R⁴ für Methyl, und R⁵ für Ethyl, steht.

Alternativ steht mindestens ein R² für einen Rest der Formel (2-2) oder einen Rest der Formel (2-3), vorzugsweise für einen Rest der Formel (2-2). Dabei stehen R⁵⁻² und R⁵⁻³ jeweils vorzugsweise für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl.

In einer besonderen Ausführungsform der Erfindung steht jedes R² unabhängig voneinander für einen Rest der Formel (2-2), wobei R⁵⁻² für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl, steht.

In Formel (1) steht jedes R³ unabhängig voneinander für einen Rest der allgemeinen Formel (3):

-OCR⁶₂CONR⁷R⁸ (3).

Mit anderen Worten handelt es sich bei R³ um einen α-Hydroxycarbonsäureamid-Rest.

Dabei steht jedes R⁶ unabhängig steht für:
Wasserstoff oder
einen substituierten oder unsubstituierten Alkyl-, Alkenyl- oder Alkinylrest;
R⁷ steht für:
Wasserstoff,
einen substituierten oder unsubstituierten Alkyl-, Alkenyl- oder Alkinylrest,
einen substituierten oder unsubstituierten cycloaliphatischen Rest oder Arylrest,
für R⁸, oder
einen Rest -(CH₂)_{q}-COOR⁹, wobei p eine ganze Zahl von 2 bis 10, insbesondere 2 ist und R⁹ für einen substituierten oder unsubstituierten Alkyl-, Alkenyl- oder Alkinylrest, oder einen substituierten oder unsubstituierten cycloaliphatischen Rest oder Arylrest steht;
R⁸ steht für einen Rest der allgemeinen Formel (4):

-R¹⁰-SiR¹¹ₒ(OR¹²)₃₋ₒ (4)

wobei
R¹⁰ steht für:
einen, gegebenenfalls durch ein Heteroatom unterbrochenen Alkylenrest;
jedes R¹¹ unabhängig steht für:
einen substituierten oder unsubstituierten Alkyl-, Alkenyl- oder Alkinylrest;
jedes R¹² unabhängig steht für:
einen substituierten oder unsubstituierten Alkyl-, Alkenyl- oder Alkinylrest,
einen Acylrest,
oder einen Rest der Formel (5):

   -CR¹³₂COOR¹⁴ (5)
wobei
jedes R¹³ unabhängig steht für:
Wasserstoff; oder
einen substituierten oder unsubstituierten Alkyl-, Alkenyl- oder Alkinylrest;
R¹⁴ steht für: einen substituierten oder unsubstituierten Alkyl-, Alkenyl- oder Alkinylrest; und o unabhängig für 0, 1 oder 2 steht, und
m unabhängig für 0 oder 1 und n unabhängig für 0, 1, 2 oder 3 steht, wobei die Summe n + m maximal 3 beträgt.

Bevorzugt steht einer der Reste R⁶ für Wasserstoff und der zweite der Reste R⁶ für Wasserstoff oder einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, insbesondere Methyl.

R⁷ steht vorzugsweise für Wasserstoff, einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, insbesondere Methyl, oder für R⁸.

R¹⁰ ist vorzugsweise ein Alkylenrest der Formel -(CH₂)ₚ-, wobei p eine ganze Zahl von 1 bis 6, insbesondere 3 ist.

Jedes R¹¹ steht vorzugsweise unabhängig voneinander für einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, besonders bevorzugt Methyl oder Ethyl.

Jedes R¹² steht vorzugsweise unabhängig voneinander für einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, besonders bevorzugt Methyl oder Ethyl.

Jedes R¹³ steht vorzugsweise für Wasserstoff oder einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, insbesondere Methyl. Besonders bevorzugt steht ein Rest R¹³ für Wasserstoff und der zweite der Reste R¹³ für Wasserstoff oder einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, insbesondere Methyl.

R¹⁴ steht vorzugsweise für einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, besonders bevorzugt Methyl oder Ethyl.

o steht für 0, 1 oder 2, vorzugsweise für 0 oder 1, besonders bevorzugt für 0.

Vorzugsweise steht jedes R³ unabhängig voneinander für einen Rest der Formel (3), wobei einer der Reste R⁶ für Wasserstoff und der zweite der Reste R⁶ für Wasserstoff oder einen substituierten oder unsubstituierten Alkylrest mit 1 bis 10 Kohlenstoffatomen, vorzugsweise einen unsubstituierten Alkylrest mit 1 bis 10 Kohlenstoffatomen, vorzugsweise mit 1 bis 4 Kohlenstoffatomen, insbesondere Methyl, R⁷ für Wasserstoff, einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, insbesondere Methyl, und R⁸ für einen Rest der Formel (4) steht, wobei R¹⁰ ein Alkylenrest der Formel -(CH₂)ₚ- ist, wobei p eine ganze Zahl von 1 bis 6, insbesondere 3 ist, jedes R¹¹ unabhängig voneinander für einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, besonders bevorzugt Methyl oder Ethyl, und jedes R¹² unabhängig voneinander für einen substituierten oder unsubstituierten Alkylrest mit 1 bis 10 Kohlenstoffatomen, vorzugsweise einen unsubstituierten Alkylrest mit 1 bis 10 Kohlenstoffatomen, insbesondere mit 1 bis 4 Kohlenstoffatomen, besonders bevorzugt Methyl oder Ethyl, und o für 0, 1 oder 2, vorzugsweise 0 oder 1 steht.

Besonders bevorzugt steht jedes R³ unabhängig voneinander für einen Rest der Formel (3), wobei einer der Reste R⁶ für Wasserstoff und der zweite der Reste R⁶ für Methyl, R⁷ für Wasserstoff oder Methyl, und R⁸ für einen Rest der Formel (4) steht, wobei R¹⁰ ein Alkylenrest der Formel -(CH₂)ₚ-ist, wobei p für 3 steht, jedes R¹¹ unabhängig voneinander für Methyl oder Ethyl, und jedes R¹² unabhängig voneinander für Methyl oder Ethyl, und o für 0, 1 oder 2, vorzugsweise 0 oder 1, besonders bevorzugt 0 steht.

In Formel (1) sind n und m so gewählt, dass die Summe n + m maximal 3 beträgt, d.h. das Silan der Formel (1) enthält mindestens einen Rest R³, d.h. mindestens einen α-Hydroxycarbonsäureamid-Rest. n steht dabei für 0 oder 1, vorzugsweise für 1. m steht für 0, 1, 2 oder 3, vorzugsweise für 0, 1 oder 2, besonders bevorzugt für 2.

Ganz besonders bevorzugte Silane der Formel (1) sind ausgewählt aus Verbindungen, die durch gezielte Amidierung von Methyl-tris(ethyllactato)silan, Ethyl-tris(ethyllactato)silan, Phenyl-tris(ethyllactato)silan, Vinyl-tris(ethyllactato)silan, Tetra(ethyllactato)silan oder Mischungen davon mit einem Amin der Formel (6):

(HR⁷N)-R¹⁰-SiR¹¹ₒ(OR¹²)₃₋ₒ (6)

erhalten werden, wobei
o, R⁷, R¹⁰, sowie jedes R¹¹ und jedes R¹², jeweils unabhängig voneinander, die oben angegebenen allgemeinen, bevorzugten und besonders bevorzugten Bedeutungen haben. Besonders bevorzugt handelt es sich um ein Amidierungsprodukt von Methyl-tris(ethyllactato)silan, Ethyl-tris(ethyllactato)silan, Phenyl-tris(ethyllactato)silan, Vinyl-tris(ethyllactato)silan, Tetra(ethyllactato)silan oder Mischungen davon mit 3-Aminopropyltrimethoxysilan und/oder 3-Aminopropyltriethoxysilan.

Gegenstand der Erfindung ist weiterhin ein Verfahren zur Herstellung der erfindungsgemäßen Silane, wobei ein Silan der Formel (5),

Si(R¹)ₘ(R²)₄₋ₘ (5)

wobei
m, sowie jedes R¹ und jedes R², jeweils unabhängig voneinander, die oben angegebenen allgemeinen, bevorzugten und besonders bevorzugten Bedeutungen haben,
mit mindestens einer Aminosilanverbindung der allgemeinen Formel (6):

(HR⁷N)-R¹⁰-SiR¹¹ₒ(OR¹²)₃₋ₒ (6)

wobei
o, R⁷, R¹⁰, sowie jedes R¹¹ und jedes R¹², jeweils unabhängig voneinander, die oben angegebenen allgemeinen, bevorzugten und besonders bevorzugten Bedeutungen haben,
miteinander umgesetzt werden.

Vorzugsweise liegt dabei das Molverhältnis von Silan der Formel (5) zur Aminosilanverbindung der allgemeinen Formel (6) bei 2 : 1 bis 30 : 1, besonders bevorzugt bei 4 : 1 bis 15 : 1.

Vorzugsweise wird das Silan der Formel (5) und die Aminosilanverbindung der allgemeinen Formel (6) bei Normaldruck (1 bar) und einer Temperatur von 40 bis 80°C, vorzugsweise 50 bis 80°C, insbesondere bevorzugt 60 bis 80°C umgesetzt. Dazu werden die genannten Edukte miteinander gerührt, vorzugsweise für mindestens 10 Minuten, vorzugsweise mindestens 30 Minuten, besonders bevorzugt mindestens 60 Minuten.

Weiterer Gegenstand der Erfindung sind härtbare Zusammensetzungen, enthaltend mindestens ein Silan der Formel (1) und mindestens ein Polyorganosiloxan, wobei das Polyorganosiloxan mindestens eine, an ein Siliziumatom gebundene, Hydroxygruppe aufweist.

Die härtbaren Zusammensetzungen enthalten das Silan der Formel (1) vorzugsweise in einer Menge von 2 bis 7 Gew.-%, besonders bevorzugt in einer Menge von 4 bis 6 Gew.-%, jeweils bezogen auf das Gesamtgewicht der Zusammensetzung. Wird ein Gemisch mehrerer Silane der Formel (1) eingesetzt, beziehen sich die Mengenangaben selbstverständlich auf die Gesamtmenge an Silanen der Formel (1) in der Zusammensetzung.

Die härtbaren Zusammensetzungen enthalten zudem mindestens ein Polyorganosiloxan, das mindestens eine, an ein Siliziumatom gebundene, Hydroxygruppe aufweist. Vorzugsweise weist das Polyorganosiloxan mindestens zwei, an ein Siliziumatom gebundene, Hydroxygruppen auf. Es ist zudem bevorzugt, dass die Hydroxygruppe oder Hydroxygruppen an terminale Siliziumatome gebunden sind. Ist das Polyorganosiloxan verzweigt, weist es bevorzugt an jedem Ende eine Hydroxygruppe auf.

Vorzugsweise handelt es sich bei dem Polyorganosiloxan, das mindestens eine, an ein Siliziumatom gebundene, Hydroxygruppe aufweist, um ein Polydiorganosiloxan, vorzugsweise ein Polydimethylsiloxan.

Bevorzugt kommt daher als Polyorganosiloxan, das mindestens eine, an ein Siliziumatom gebundene, Hydroxygruppe aufweist, ein α,ω-dihydroxyterminiertes Polydiorganosiloxan, insbesondere ein α,ω-dihydroxyterminiertes Polydimethylsiloxan zum Einsatz. Besonders bevorzugt sind α,ω-dihydroxyterminierte Polydimethylsiloxane, die eine kinematische Viskosität bei 25°C von 5000 bis 120000 cSt, insbesondere 10000 bis 100000 cSt und besonders bevorzugt 50000 bis 90000 cSt aufweisen.

Die härtbaren Zusammensetzungen enthalten das mindestens eine Polyorganosiloxan, das mindestens eine, an ein Siliziumatom gebundene, Hydroxygruppe aufweist vorzugsweise in einer Menge von 30 bis 90 Gew.-%, besonders bevorzugt in einer Menge von 40 bis 60 Gew.-%, jeweils bezogen auf das Gesamtgewicht der Zusammensetzung. Wird ein Gemisch mehrerer Polyorganosiloxane eingesetzt, beziehen sich die Mengenangaben selbstverständlich auf die Gesamtmenge an Polyorganosiloxanen, die mindestens eine, an ein Siliziumatom gebundene, Hydroxygruppe aufweisen, in der Zusammensetzung.

Die härtbaren Zusammensetzungen können das Polyorganosiloxan, das mindestens eine, an ein Siliziumatom gebundene Hydroxygruppe aufweist, und das Silan der Formel (1) als separate Bestandteile enthalten. Es ist jedoch ebenso möglich, dass diese Bestandteile in Form eines Prepolymers vorliegen. Bei dem Prepolymer handelt es sich um ein Umsetzungsprodukt der beiden Bestandteile. Entsprechende Umsetzungen sind bekannt und werden auch als Endcapping bezeichnet. Dieses kann gegebenenfalls in Gegenwart eines Katalysators durchgeführt werden, wobei dieser selektiv die Endgruppenverkappung vermitteln soll ohne gleichzeitig das Polyorganosiloxan zu härten. Geeignete Katalysatoren sind beispielsweise Säuren, organische Lithium-Verbindungen, wie sie beispielsweise in EP 0 564 253 A1 beschrieben werden, Amine, anorganische Oxide, Kaliumacetat, Organotitanderivate, Titan/Amin-Kombinationen und Carbonsäure/Amin-Kombinationen.

Liegen das Polyorganosiloxan, das mindestens eine, an ein Siliziumatom gebundene Hydroxygruppe aufweist, und das Silan der Formel (1) als Prepolymer vor, so sind die oben genannten Mengenangaben für Polyorganosiloxan einerseits und Silan andererseits für das Prepolymer additiv anzusetzen. Die härtbaren Zusammensetzungen enthalten das Prepolymer demnach vorzugsweise in einer Menge von 32 bis 97 Gew.-%, besonders bevorzugt in einer Menge von 44 bis 66 Gew.-%, jeweils bezogen auf das Gesamtgewicht der Zusammensetzung. Wird ein Gemisch mehrerer Prepolymere eingesetzt, beziehen sich die Mengenangaben selbstverständlich auf die Gesamtmenge an Prepolymeren in der Zusammensetzung.

Die erfindungsgemäßen Zusammensetzungen vernetzen in Gegenwart von Feuchtigkeit und härten dabei unter Ausbildung von Si-O-Si-Bindungen aus. Diese Aushärtung kann durch Zugabe eines geeigneten Härtungskatalysators beschleunigt werden.

Bevorzugt enthält die härtbare Zusammensetzung daher weiterhin mindestens einen Härtungskatalysator, insbesondere eine Zinnverbindung.

Vorzugsweise handelt es sich dabei um eine zinnorganische Verbindung oder ein anorganisches Zinnsalz. Zinn liegt in diesen Zinnverbindungen vorzugsweise zwei- oder vierwertig vor. Geeignete anorganische Zinnsalze sind beispielsweise Zinn(II)chlorid und Zinn(IV)chlorid. Vorzugsweise kommen als Zinnverbindungen jedoch zinnorganische Verbindungen (Zinnorganyle) zum Einsatz. Geeignete zinnorganische Verbindungen sind beispielsweise die 1,3-Dicarbonylverbindungen des zwei- bzw. vierwertigen Zinns, beispielsweise die Acetylacetonate wie Di(n-butyl)zinn-(IV)-di(acetylacetonat), Di(n-octyl)zinn-(IV)-di(acetylacetonat), (n-Octyl)(n-butyl)-zinn-(IV)-di(acetylacetonat); die Dialkylzinn-(IV)-Dicarboxylate, zum Beispiel Di-n-butylzinndilaurat, Di-n-butylzinnmaleat, Di-n-butylzinndiacetat, Di-n-octylzinndilaurat Di-n-octylzinndiacetat oder die entsprechenden Dialkoxylate, zum Beispiel Di-n-butylzinndimethoxid; Oxide des vierwertigen Zinns, beispielsweise Dialkylzinnoxide, wie beispielsweise Di-n-butylzinnoxid und Di-n-octylzinnoxid; sowie die Zinn-(II)-carboxylate wie Zinn(II)octoat oder Zinn(II)phenolat.

Ferner eignen sich Zinnverbindungen von Ethylsilicat, Dimethylmaleat, Diethylmaleat, Dioctylmaleat, Dimethylphthalat, Diethylphthalat, Dioctylphthalat, wie beispielsweise Di(n-butyl)zinn(IV)-di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-octylmaleat); sowie Di(n-butyl)zinn(IV)sulfid, (n-Butyl)₂Sn(SCH₂COO), (n-Octyl)₂Sn(SCH₂COO), (n-Octyl)₂Sn(SCH₂CH₂COO), (n-Octyl)₂Sn(SCH₂CH₂COOCH₂CH₂OCOCH₂S), (n-Butyl)₂Sn(SCH₂COO-i-C₈H₁₇)₂, (n-Octyl)₂Sn(SCH₂COO-i-C₈H₁₇)₂, (n-Octyl)₂Sn(SCH₂COO-n-C₈H₁₇)₂.

Bevorzugt ist die Zinnverbindung ausgewählt aus 1,3-Dicarbonylverbindungen des zwei- bzw. vierwertigen Zinns, den Dialkylzinn-(IV)-Dicarboxylaten, den Dialkylzinn-(IV)-Dialkoxylaten, den Dialkylzinn-(IV)-oxiden, den Zinn-(II)-carboxylaten und Mischungen davon.

Besonders bevorzugt ist die Zinnverbindung ein Dialkylzinn-(IV)-Dicarboxylat, insbesondere Di-n-butylzinndilaurat oder Di-n-octylzinndilaurat.

Neben oder statt der genannten Zinnverbindungen können auch zinnfreie Härtungskatalysatoren zum Einsatz kommen. Die Zinnverbindungen zeigen zwar sehr hohe katalytische Aktivität, stehen jedoch teilweise im Verdacht, gesundheitsgefährdend zu sein. In einer besonderen Ausführungsform enthalten die Zusammensetzungen daher ausschließlich zinnfreie Härtungskatalysatoren, d.h. sind zinnfrei.

Geeignete zinnfreie Härtungskatalysatoren sind beispielsweise metallorganische Verbindungen des Eisens, insbesondere die 1,3-Dicarbonylverbindungen des Eisens wie z. B. Eisen-(III)-acetylacetonat.

Als Härtungskatalysatoren können auch Borhalogenide wie Bortrifluorid, Bortrichlorid, Bortribromid, Bortrijodid oder gemischte Borhalogenide eingesetzt werden. Besonders bevorzugt sind Bortrifluoridkomplexe wie z.B. Bortrifluorid-diethyletherat, die als Flüssigkeiten einfacher handhabbar sind als gasförmige Borhalogenide.

Ferner sind im Allgemeinen Amine, Stickstoff-Heterocyclen und Guanidin-Derivate zur Katalyse geeignet. Ein besonders geeigneter Katalysator aus dieser Gruppe ist 1,8-Diazabicyclo-[5.4.0]-undec-7-en (DBU).

Darüber hinaus werden als Katalysatoren vorzugsweise Titan-, Aluminium- und Zirkonverbindungen oder Mischungen aus einem oder mehreren Katalysatoren aus einer oder mehreren der gerade erwähnten Gruppen eingesetzt. Einerseits kann auch auf diese Weise der Einsatz von Zinnverbindungen vermieden werden, zum anderen lässt sich eine bessere Adhäsion zu normalerweise schlecht anhaftenden organischen Oberflächen wie z. B. Acrylaten erreichen. Unter den Titan-, Aluminium- und Zirkonkatalysatoren werden die Titankatalysatoren bevorzugt eingesetzt, da mit ihnen die besten Härtungsergebnisse erzielt werden.

Als Titankatalysatoren eignen sich Verbindungen, die Hydroxygruppen und/oder substituierte oder unsubstituierte Alkoxygruppen aufweisen, also Titanalkoxide der allgemeinen Formel

Ti(OR^{z})₄,

wobei R^{z} eine organische Gruppe, vorzugsweise eine substituierte oder unsubstituierte Kohlenwasserstoffgruppe mit 1 bis 20 C-Atomen ist und die 4 Alkoxygruppen -OR^{z} gleich oder verschieden sind. Ferner können ein oder mehrere der Reste -OR^{z} durch Acyloxygruppen -OCOR^{z} ersetzt werden.

Ebenso eigenen sich als Titankatalysatoren Titanalkoxide, bei denen eine oder mehrere Alkoxygruppen durch eine Hydroxygruppe oder Halogenatome ersetzt sind.

Ferner lassen sich Titanchelatkomplexe einsetzen.

Auch Aluminiumkatalysatoren lassen sich als Härtungskatalysatoren einsetzen,
z.B. Aluminiumalkoxide

Al(OR^{z})₃,

wobei R^{z} obige Bedeutung hat, d.h. eine organische Gruppe, bevorzugt ein substituierter oder unsubstituierter Kohlenwasserstoffrest mit 1 bis 20 C-Atomen ist und die drei Reste R^{z} gleich oder verschieden sind. Auch bei den Aluminiumalkoxiden können ein oder mehrere der Alkoxyreste durch Acyloxyreste -OC(O)R^{z} ersetzt sein.

Ferner können Aluminiumalkoxide eingesetzt werden, bei denen ein oder mehrere Alkoxyreste durch eine Hydroxygruppe oder Halogenatome ersetzt sind.

Von den beschriebenen Aluminiumkatalysatoren sind die reinen Aluminiumalkoholate im Hinblick auf ihre Stabilität gegenüber Feuchtigkeit und die Härtbarkeit der Mischungen, denen sie zugesetzt werden, bevorzugt. Außerdem werden Aluminium-Chelatkomplexe bevorzugt.

Als Zirkonkatalysatoren eignen sich z.B.: Tetramethoxyzirkon, Tetraethoxyzirkon.

Ganz besonders bevorzugt werden Diisopropoxyzirkonbis(ethylacetoacetat), Triisopropoxyzirkon(ethylacetoacetat) und Isopropoxyzirkontris(ethylacetoacetat) eingesetzt.

Ferner können beispielsweise Zirkonacylate eingesetzt werden.

Auch halogenierte Zirkonkatalysatoren lassen sich einsetzen.

Ferner können auch Zirkonchelatkomplexe eingesetzt werden.

Außerdem können als Härtungskatalysatoren Carbonsäuresalze von Metallen oder auch eine Mischung mehrerer solcher Salze herangezogen werden, wobei diese ausgewählt sind aus den Carboxylaten folgender Metalle: Calcium, Vanadium, Eisen, Zink, Titan, Kalium, Barium, Mangan, Nickel, Kobalt und/oder Zirkon.

Von den Carboxylaten sind die Calcium-, Vanadium-, Eisen-, Zink-, Titan-, Kalium-, Barium-, Mangan- und Zirkoniumcarboxylate bevorzugt, da sie eine hohe Aktivität aufweisen. Besonders bevorzugt werden Calcium-, Vanadium-, Eisen-, Zink-, Titan- und Zirkoniumcarboxylate. Ganz besonders bevorzugt werden Eisen- und Titancarboxylate.

Die härtbaren Zusammensetzungen enthalten den Härtungskatalysator vorzugsweise in einer Menge von 0,01 bis 2 Gew.-%, bevorzugt in einer Menge von 0,05 bis 2 Gew.-%, besonders bevorzugt in einer Menge von 0,1 bis 0,5 Gew.-%, jeweils bezogen auf das Gesamtgewicht der Zusammensetzung. Wird ein Gemisch mehrerer Härtungskatalysatoren eingesetzt, beziehen sich die Mengenangaben selbstverständlich auf die Gesamtmenge an Härtungskatalysator in der Zusammensetzung.

Die härtbaren Zusammensetzungen können neben den bereits genannten Bestandteilen noch ein oder mehrere weitere Bestandteile enthalten, die dazu dienen können, bestimmte Eigenschaften der härtbaren Zusammensetzung und/oder des ausgehärteten Produkts gezielt zu beeinflussen.

Diese weiteren Bestandteile können beispielsweise ausgewählt sein aus der Gruppe umfassend Weichmacher, Stabilisatoren, Antioxidantien, Füllstoffe, Reaktivverdünner, Trockenmittel, Haftvermittler, UV-Stabilisatoren, rheologische Hilfsmittel und/oder Lösungsmittel. Dabei kommt den Haftvermittlern, Weichmachern, Füllstoffen und Stabilisatoren, umfassend Antioxidantien und UV-Stabilisatoren, besondere Bedeutung zu.

Bevorzugt enthalten die härtbaren Zusammensetzungen daher mindestens einen weiteren Bestandteil.

Die erfindungsgemäße härtbare Zusammensetzung kann demnach außerdem einen oder mehrere Haftvermittler enthalten. Unter einem Haftvermittler wird eine Substanz verstanden, die die Haftungseigenschaften von Klebeschichten auf Oberflächen verbessert.

Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- oder β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, *α*-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole.

Besonders gut geeignet sind Silan-Haftvermittler, insbesondere Alkoxysilane, mit einer (weiteren) funktionellen Gruppe wie z.B. einer Aminogruppe, einer Mercaptogruppe, einer Epoxygruppe, einer Carboxylgruppe, einer Vinylgruppe, einer Isocyanatgruppe, einer Isocyanuratgruppe oder einem Halogen. Beispiele sind γ-Mercaptopropyltrimethoxysilan, γ-Mercaptopropyltriethoxysilan, γ-Mercaptopropylmethyldimethoxysilan, γ-Glycidoxypropyltrimethoxysilan, γ-Glycidoxypropyltriethoxysilan, γ-Glycidoxypropylmethyldimethoxysilan, β-Carboxyethyltriethoxysilan, ß-Carboxyethylphenylbis(2-methoxyethoxy)silan, N-β-(Carboxymethyl) aminoethyl-γ-aminopropyltrimethoxysilan, Vinyltrimethoxysilan, Vinyltriethoxysilan, γ-Acroyloxypropylmethyltriethoxysilan, γ-Isocyanatopropyltrimethoxysilan, γ-Isocyanatopropyltriethoxysilan, γ-Isocyanatopropylmethyldiethoxysilan, γ-Isocyanatopropylmethyldimethoxysilan, Tris(trimethoxysilyl)isocyanurat und γ-Chloropropyltrimethoxysilan.

Besonders bevorzugt als Haftvermittler sind insbesondere Aminosilane (aminofunktionelle Alkoxysilane bzw. Aminoalkylalkoxysilane), wie z.B. γ-Aminopropyltrimethoxysilan, γ-Aminopropyltriethoxysilan, γ-Aminopropyltriisopropoxysilan, γ-Aminopropylmethyldimethoxysilan, γ-Aminopropylmethyldiethoxysilan, γ-(2-Aminoethyl)-3-aminopropyltrimethoxysilan, γ-(2-Aminoethyl) aminopropylmethyldimethoxysilan, γ-(2-Aminoethyl)aminopropyltriethoxysilan, γ-(2-Aminoethyl) aminopropylmethyldiethoxysilan, γ-(2-Aminoethyl) aminopropyltriisopropoxysilan, N-Phenyl-γ-aminopropyltrimethoxysilan, N-Benzyl-γ-aminopropyltrimethoxysilan, und N-Vinylbenzyl-γ-aminopropyltriethoxysilan, oder oligomere Aminosilane, wie z.B. aminoalkylgruppenmodifiziertes Alkylpolysiloxan (Dynasylan 1146).

Weiterhin als Haftvermittler bevorzugt ist ein Silan der allgemeinen Formel (7)

R¹³R¹⁴N-R'-SiX'Y'Z' (7),

worin
- R¹³ und R¹⁴ unabhängig voneinander Wasserstoff oder C₁ - C₈ -Alkylreste,
- R' ein zweibindiger, gegebenenfalls ein Heteroatom enthaltender, Kohlenwasserstoffrest mit 1-12 C-Atomen, und
- X', Y', Z' unabhängig voneinander C₁ - C₈ - Alkyl-, C₁ - C₈ - Alkoxy- oder C₁ - C₈ - Acyloxyreste sind, wobei mindestens einer der Reste ein C₁ - C₈ - Alkoxy- oder C₁ - C₈ - Acyloxyrest bzw. -gruppe ist.

Derartige Verbindungen weisen naturgemäß eine hohe Affinität zu den bindenden Polymerkomponenten der erfindungsgemäßen härtbaren Zusammensetzung, aber auch zu einer großen Bandbreite an polaren, sowie unpolaren Oberflächen auf und tragen deshalb zur Ausbildung einer besonders stabilen Haftung zwischen der Kleb- oder Dichtstoffzusammensetzung und den jeweils zu verklebenden oder abzudichtenden Substraten bei.

Bei der Bindegruppe R' kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein. Gegebenenfalls ist als Heteroatom darin Stickstoff (N) oder Sauerstoff (O) enthalten. Bevorzugt ist R' ein Kohlenwasserstoffrest mit 1 bis 6 C-Atomen, insbesondere mit 1 bis 3 C-Atomen, beispielsweise Methylen oder n-Propylen.

Bevorzugt sind X', Y' und Z' jeweils unabhängig voneinander eine Methyl-, eine Ethyl-, eine Methoxy- oder eine Ethoxygruppe. Besonders bevorzugt sind X', Y' und Z' Alkoxygruppen, insbesondere Methoxygruppen. Ganz besonders bevorzugt ist die Gruppe -SiX'Y'Z' eine Trimethoxy- oder Dimethoxymethyl-silylgruppe. Wenn X', Y' und/oder Z' eine Acyloxygruppe sind, kann dies z. B. die Acetoxygruppe -OCO-CH₃ sein.

Besonders bevorzugt kommt als Haftvermittler eine Aminosilanverbindung der allgemeinen Formel (6), wie oben beschrieben, zum Einsatz. Diese kann daher sowohl zur Herstellung des Silans der Formel (1) eingesetzt werden, als auch in der härtbaren Zusammensetzung die Funktion eines Haftvermittlers übernehmen.

Die härtbaren Zusammensetzungen enthalten den Haftvermittler vorzugsweise in einer Menge von bis zu 20 Gew.-%, vorzugsweise in einer Menge von 0,05 bis 4 Gew.-%, bevorzugt in einer Menge von 0,1 bis 2 Gew.-%, besonders bevorzugt in einer Menge von 0,2 bis 2 Gew.-%, jeweils bezogen auf das Gesamtgewicht der Zusammensetzung. Wird ein Gemisch mehrerer Haftvermittler eingesetzt, beziehen sich die Mengenangaben selbstverständlich auf die Gesamtmenge an Haftvermittler in der Zusammensetzung.

Es ist denkbar, dass die Viskosität der härtbaren Zusammensetzung für bestimmte Anwendungen zu hoch ist. Diese kann man dann in der Regel durch Verwendung eines Reaktivverdünners auf einfache und zweckmäßige Weise verringern, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z.B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit den anderen Bestandteilen unter Verringerung der Viskosität mischbar sind und über mindestens eine mit dem Polymer reaktive Gruppe verfügen, einsetzen.

Die Viskosität des Reaktivverdünners beträgt bevorzugt weniger als 20.000 mPas, besonders bevorzugt etwa 0,1 - 6.000 mPas, ganz besonders bevorzugt 1 - 1000 mPas (Brookfield RVT, 23 °C, Spindel 7, 10 U/min).

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Weiterhin kann man als Reaktivverdünner Polymere einsetzen, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthalten kann. Die OH -Gruppen können sowohl primär als auch sekundär sein.

Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung der bevorzugten Reaktivverdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Vorzugsweise weist die als Reaktivverdünner vorliegende Verbindung mindestens eine Alkoxysilylgruppe auf, wobei unter den Alkoxysilylgruppen die Di- und Trialkoxysilylgruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate sind drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der härtbaren Zusammensetzung lassen sich neben oder anstatt eines Reaktivverdünners auch Lösungsmittel und / oder Weichmacher einsetzen.

Als Lösungsmittel eignen sich aliphatische oder aromatische Kohlenwasserstoffe, halogenierte Kohlenwasserstoffe, Ketone, Ether, Ester, Esteralkohole, Ketoalkohole, Ketoether, Ketoester und Etherester.

Die hierin beschriebene Zusammensetzung kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Ester der Abietinsäure, Adipinsäureester, Azelainsäureester, Benzoesäureester, Buttersäureester, Essigsäureester, Ester höherer Fettsäuren mit etwa 8 bis etwa 44 C-Atomen, epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon.

Beispielsweise eignen sich von den Phthalsäureestern Dioctylphthalat, Dibutylphthalat, Diisoundecylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt als Weichmacher sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im Wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Vorzugsweise weist die härtbare Zusammensetzung mindestens einen Weichmacher, insbesondere ein Polydimethylsiloxan auf.

Die härtbaren Zusammensetzungen enthalten den Reaktivverdünner, das Lösungsmittel und/oder den Weichmacher vorzugsweise in einer Menge von 1 bis 50 Gew.-%, bevorzugt in einer Menge von 10 bis 40 Gew.-%, besonders bevorzugt in einer Menge von 20 bis 30 Gew.-%, jeweils bezogen auf das Gesamtgewicht der Zusammensetzung. Wird ein Gemisch mehrerer Reaktivverdünner, Lösungsmittel und/oder Weichmacher eingesetzt, beziehen sich die Mengenangaben selbstverständlich auf die Gesamtmenge an Reaktivverdünner, Lösungsmittel und/oder Weichmacher in der Zusammensetzung.

Vorzugsweise enthält die härtbare Zusammensetzung mindestens einen Stabilisator, ausgewählt aus Antioxidantien, UV-Stabilisatoren und Trockenmittel.

Als Antioxidantien kommen alle üblichen Antioxidantien in Frage. Sie sind vorzugsweise bis zu etwa 7 Gew.-%, insbesondere bis zu etwa 5 Gew.-% enthalten.

Die hierin Zusammensetzung kann UV-Stabilisatoren enthalten, die vorzugsweise bis zu etwa 2 Gew.-%, vorzugsweise etwa 1 Gew.-% eingesetzt werden. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die Zusammensetzungen durch Trockenmittel gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Gruppen des in der Zubereitung vorliegenden erfindungsgemäßen silylgruppentragenden Polymers

Als Trockenmittel eignen sich beispielsweise Isocyanate.

Vorteilhafterweise werden als Trockenmittel aber Silane eingesetzt. Beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Hinsichtlich Effizienz und Kosten sind hier Vinyltrimethoxysilan und Tetraethoxysilan besonders bevorzugt.

Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäß eingesetzten Polymers.

Schließlich können als Trockenmittel auch Alkylorthoformiate oder -orthoacetate eingesetzt werden, z.B. Methyl- oder Ethylorthoformiat, Methyl- oder Ethylorthoacetat,

Die Zusammensetzungen enthalten in der Regel etwa 0 bis etwa 6 Gew.-% Trockenmittel.

Die hierin beschriebene Zusammensetzung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel und Spreu. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zusammensetzung, tragen aber zu einer Verstärkung der gehärteten Zusammensetzung bei.

Es ist ebenso denkbar, pyrogene und/oder gefällte Kieselsäuren mit einer höheren BET-Oberfläche, vorteilhafterweise mit 100 bis 250 m²/g, insbesondere 110 bis 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die hierin beschriebene Zusammensetzung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-%, besonders bevorzugt 2 bis 20 Gew.-%, und ganz besonders bevorzugt 5 bis 10 Gew.-%, jeweils bezogen auf das Gesamtgewicht der Zusammensetzung eingesetzt. Selbstverständlich können auch Gemische mehrerer Füllstoffe eingesetzt werden. In diesem Fall beziehen sich die Mengenangaben selbstverständlich auf die Gesamtmenge an Füllstoff in der Zusammensetzung.

Die Herstellung der härtbaren Zusammensetzung kann durch einfaches Vermischen des Polyorganosiloxans, das mindestens eine, an ein Siliziumatom gebundene, Hydroxygruppe aufweist, des Silans der Formel (1) und gegebenenfalls der weiteren Inhaltsstoffe erfolgen. Dies kann in geeigneten Dispergieraggregaten, z. B. einem Schnellmischer, geschehen. Vorzugsweise wird dabei darauf geachtet, dass die Mischung nach Möglichkeit nicht in Kontakt mit Feuchtigkeit kommt, der zu einem unerwünschten vorzeitigen Aushärten führen könnte. Entsprechende Maßnahmen sind hinlänglich bekannt und umfassen beispielsweise das Arbeiten in inerter Atmosphäre, etwa unter Schutzgas, und das Trocknen / Ausheizen einzelner Bestandteile, bevor diese zugemischt werden.

Ein bevorzugtes Herstellverfahren besteht darin, in einem ersten Schritt das Polyorganosiloxan, das mindestens eine, an ein Siliziumatom gebundene, Hydroxygruppe aufweist, und das Silan der Formel (1) zu vermischen, wobei dies in Gegenwart mindestens eines Aminosilans und mindestens eines Weichmachers erfolgen kann, in einem zweiten Schritt gegebenenfalls weitere Inhaltsstoffe mit Ausnahme des Härtungskatalysators zuzugeben und alle Bestandteile zu vermischen, und in einem dritten Schritt schließlich eine Härtungskatalysator zuzugeben und mit den übrigen Bestandteilen zu vermischen.

Gegenstand der Erfindung ist zudem die Verwendung der erfindungsgemäßen Zusammensetzungen als Kleb-, Dicht- oder Beschichtungsstoff.

Die Zusammensetzung oder Zubereitung kann als Klebstoff, Dichtmasse, Spachtelmasse und zur Herstellung von Formteilen verwendet werden. Ein weiteres Anwendungsgebiet der Zusammensetzungen ist die Verwendung als Dübel-, Loch- oder Rissspachtelmasse.

Die Zusammensetzungen und Zubereitungen eignen sich also zum Verkleben von Kunststoffen, Metallen, Glas, Keramik, Holz, Holzwerkstoffen, Papier, Papierwerkstoffen, Gummi und Textilien, zum Verkleben von Fußböden, Abdichten von Bauwerksteilen, Fenstern, Wand- und Bodenbelägen sowie Fugen im allgemeinen. Hierbei können die Materialien jeweils mit sich selbst oder beliebig untereinander verklebt werden.

Die folgenden Beispiele dienen der Erläuterung der Erfindung, die Erfindung ist aber nicht darauf beschränkt.

### Beispiele

### Beispiel 1: Herstellung eines Silans der Formel (1)

5,5 g Vinyl-tris(ethyllactato)silan wurde mit 0,4 g 3-Aminopropyl-triethoxysilan gemischt und auf 70 °C erwärmt. Das Reaktionsgemisch wurde bei 70 °C für eine Stunde gerührt. Die NMRspektroskopische Untersuchung des Reaktionsprodukts zeigte, dass es zu Abspaltung von Ethanol und einer Amidierung von Ethyllactat-Resten gekommen ist. Es resultiert ein Silan der Formel (1).

### Vergleichsbeispiel 1 (VB1):

Aus den in Tabelle 1 aufgeführten Rohstoffen wurde die Vergleichszusammensetzung VB1 hergestellt. Dazu wurden Polymer (α,ω-dihydroxy-terminiertes Polydimethylsiloxan) und Weichmacher mit dem Härter Vinyl-tris(ethyllactato)silan und 3-Aminopropyl-triethoxysilan vorgelegt und für 5 min gerührt und danach für 5 min Vakuum gezogen. Im Anschluss wurde die hochdisperse Kieselsäure unter Rühren dazugegeben und das Gemisch vakuumiert. Zuletzt wurden die restlichen Aminosilane und der Katalysator hinzugeben und 10 min unter Vakuum einformuliert.

### Beispiel 2 (B2):

Aus den in Tabelle 1 aufgeführten Rohstoffen wurde die erfindungsgemäße Zusammensetzung B2 hergestellt. Dazu wurde zunächst gemäß Beispiel 1 aus Vinyl-tris(ethyllactato)silan und 3-Aminopropyl-triethoxysilan ein Silan der Formel (1) hergestellt und dieses ohne Zwischenreinigung mit Polymer (α,ω-dihydroxy-terminiertes Polydimethylsiloxan) und Weichmacher versetzt und das Gemisch für 5 min gerührt und danach für 5 min Vakuum gezogen. Im Anschluss wurde die hochdisperse Kieselsäure unter Rühren dazugegeben und das Gemisch vakuumiert. Zuletzt wurden die restlichen Aminosilane und der Katalysator hinzugeben und 10 min unter Vakuum einformuliert.

Die hergestellten Formulierungen VB1 und B2 wurden hinsichtlich Hautbildungszeit, Härte, Dehnbarkeit und Dehnung, sowie bezüglich der Haftungseigenschaften auf verschiedenen Substraten untersucht. Alle Tests wurden für die frisch formulierte Zusammensetzung und nach 4 und 12 Wochen Alterung bei 40°C/80% relative Luftfeuchtigkeit durchgeführt. Die Ergebnisse für die Vergleichsformulierung VB1 sind in Tabelle 2 dargestellt, die Ergebnisse für die erfindungsgemäße Formulierung B2 in Tabelle 3.

Ein Vergleich der Ergebnisse für die Vergleichsformulierung VB1 und die erfindungsgemäße Formulierung B2 zeigt, dass sich bei Einsatz des erfindungsgemäßen Silans ein verbessertes Härtungsverhalten (kürzere Hautbildungszeiten bei vergleichbaren bis leicht verbesserten Härtungstiefen) erzielen lässt, und die mechanischen Eigenschaften des ausgehärteten Produkts vergleichbar sind. Zudem lässt sich bei Einsatz des erfindungsgemäßen Silans bei allen untersuchten Substraten durchgängig eine hervorragende Haftung (Cf1) erzielen, während die Vergleichsformulierung Schwächen bei der Verklebung von Aluminium und Holz zeigt.

**Tabelle 1**

| | **VB1** | **B2** |
|---|---|---|
| **Rohstoffe** | **Gew.%** | **Gew. %** |
| α,ω-dihydroxy-terminiertes Polydimethylsiloxan mit Viskosität von 80.000 cST | 49,2 | 49,2 |
| Polydimethylsiloxan mit Viskosität von 1000 cST (Weichmacher) | 36,4 | 36,4 |
| Vinyl-tris(ethyllactato)silan | 5,5 | |
| 3-Aminopropyl-triethoxysilan | 0,4 | |
| Silan der Formel (1) (Vinyl-tris(ethyllactato)silan und 3-Aminopropyl-triethoxysilan wurden im Gewichtsverhältnis 55:4 gemischt und für 1 h bei 70 °C umgesetzt) | | 5,9 |
| Hochdisperse Kieselsäure | 7,4 | 7,4 |
| Aminosilan (Gemisch aus I) Bis[3-(trimethoxysilyl)propyl]amin und II) Umsetzungsprodukt aus 3-(N,N-Dimethylamino)-propyltrimethoxysilan und OH-terminiertem Polydimethylsiloxan, wobei I) und II) im Gewichtsverhältnis 15:7 vorliegen) | 0,85 | 0,85 |
| Härtungskatalysator (Di-n-butylzinndilaurat (DBTL)) | 0,25 | 0,25 |

**Tabelle 2: Eigenschaften der Vergleichsformulierung VB1**

| **Formulierung VB1** | **frisch** | **4 Wochen Lagerung bei 40% relative Luftfeuchtigkeit und 80 °C** | **12 Wochen Lagerung bei 40% relative Luftfeuchtigkeit und 80 °C** |
|---|---|---|---|
| Hautbildungszeit (min) | 7 | 20 | 30 |
| Shore A 1d | 15 | 13 | 8 |
| Shore A 7d | 25 | 22 | 22 |
| Härtungstiefe (mm / 24 h) | 4,1 | 4,2 | 4,2 |
| E-Modul bei 100 % (N/mm²) | 0,31 | n.b. | 0,24 |
| Bruchkraft (N/mm²) | 1,2 | n.b. | 1,2 |
| Bruchdehnung (%) | 548 | n.b. | 574 |
| | | | |

| **Haftung** | | | |
|---|---|---|---|
| PVC | Cf1 | Cf1 | Cf1 |
| Messing | Cf1 | Cf1 | Cf1 |
| Glas | Cf1 | Cf1 | Cf1 |
| Aluminium (E6EV1) | Af1 | Af2 | Af2 |
| Fliese | Cf1 | Cf1 | Cf1 |
| GFK | Cf1 | Cf1 | Cf1 |
| Holz | Cf1 | Af1 | Af2 |

| | | | |
|---|---|---|---|
| n.b.: nicht bestimmt GFK: glasfaserverstärkter Kunststoff | | | |

**Tabelle 3: Eigenschaften der erfindungsgemäßen Formulierung B2**

| **Formulierung B2** | **frisch** | **4 Wochen Lagerung bei 40% relative Luftfeuchtigkeit und 80 °C** | **12 Wochen Lagerung bei 40% relative Luftfeuchtigkeit und 80 °C** |
|---|---|---|---|
| Hautbildungszeit (min) | 6 | 8 | 18 |
| Shore A 1d | 14 | 13 | 7 |
| Shore A 7d | 25 | 22 | 20 |
| Härtungstiefe (mm / 24 h) | 4,0 | 4,5 | 4,3 |
| E-Modul bei 100 % (N/mm²) | 0,29 | n.b. | 0,24 |
| Bruchkraft (N/mm²) | 1,1 | n.b. | 0,9 |
| Bruchdehnung (%) | 523 | n.b. | 443 |
| | | | |

| **Haftung** | | | |
|---|---|---|---|
| PVC | Cf1 | Cf1 | Cf1 |
| Messing | Cf1 | Cf1 | Cf1 |
| Glas | Cf1 | Cf1 | Cf1 |
| Aluminium (E6EV1) | Cf1 | Cf1 | Cf1 |
| Fliese | Cf1 | Cf1 | Cf1 |
| GFK | Cf1 | Cf1 | Cf1 |
| Holz | Cf1 | Cf1 | Cf1 |

| | | | |
|---|---|---|---|
| n.b.: nicht bestimmt GFK: glasfaserverstärkter Kunststoff | | | |

### Messung der Hautbildungszeit:

Die Bestimmung der Hautbildungszeit erfolgt im Normalklima (23 +/- 2°C, relative Luftfeuchte 50 +/- 5 %). Die Temperatur des Dichtstoffes muss 23 +/-2°C betragen, der Dichtstoff ist mindestens 24h im Labor vorzulagern. Der Dichtstoff wird auf ein Blatt Papier aufgebracht und mit einem Ziehspachtel zu einem Fell ausgezogen (Dicke ca. 2 mm, Breite ca. 7 cm). Stoppuhr sofort starten. In Intervallen die Oberfläche leicht mit der Fingerspitze berühren und Finger wieder wegziehen - so stark auf die Oberfläche drücken, dass ein Abdruck auf der Oberfläche bei Erreichen der Hautbildungzeit verbleibt. Die Hautbildungszeit ist erreicht, wenn keine Dichtmasse mehr an der Fingerspitze haften bleibt. Die Hautbildungszeit wird in Minuten angegeben.

### Messung der Shore A Härte:

Die Durchführung erfolgt gemäß an ISO 868.

### Messung der Härtungstiefe:

Ein Dichtstoffstrang mit einer Höhe von 10 mm (+/- 1 mm) und einer Breite von 20 mm (+/- 2 mm) wird mit einem entsprechenden Spachtel auf ein Kunststoffkartenblatt appliziert. Nach einer Lagerung von 24 Stunden bei Normalklima (23 +/- 2 °C, relative Luftfeuchte 50 +/- 5 %), wird ein Stück aus dem Strang herausgeschnitten und die Dicke der ausgehärteten Schicht mit einer Schieblehre gemessen. Die Härtungstiefe wird in [mm / 24 h] angegeben.

### Messung der mechanischen Eigenschaften (Zugversuch):

Mit dem Zugversuch werden die Bruchkraft, Bruchdehnung und Dehnspannungswerte (E-Module) in Anlehnung an DIN 53504 ermittelt.

Abweichung zur Norm: Als Probekörper werden Schulterstäbe mit folgenden Dimensionen verwendet: Dicke: 2 +/- 0.2 mm; Breite des Stegs: 10 +/- 0,5 mm; Länge des Stegs: ca. 45 mm; Gesamtlänge: 9 cm. Die Prüfung erfolgt bei im Normklima (23 +/- 2 °C, 50 +/- 5 % rel. Luftfeuchtigkeit). Die Prüfung erfolgt nach 7 Tagen Aushärtung.

Durchführung: Von der Masse wird ein 2 mm dicker Film ausgezogen. Der Film wird für 7 Tage im Normklima gelagert und dann die Schulterstäbe herausgestanzt. Für jede Bestimmung sind je drei Schulterstäbe herzustellen. Die Prüfung ist im Normklima durchzuführen. Die Prüflinge müssen vor der Messung mindestens 20 Minuten an die Prüftemperatur angeglichen (d.h. gelagert) werden. Vor der Messung ist die Dicke der Probekörper an mindestens 3 Stellen bei Raumtemperatur mit einer Schieblehre zu messen, d.h. bei den Schulterstäben sind innerhalb der Anfangsmesslänge vorzugsweise die Enden und die Mitte zu vermessen. Bei elastischen Materialien empfiehlt es sich zusätzlich noch quer über den Steg zu messen. Der Mittelwert ist in das Messprogramm einzugeben. Die Probekörper sind so in die Zugprüfmaschine einzuspannen, dass die Längsachse mit der mechanischen Achse der Zugprüfmaschine übereinstimmt und eine möglichst große Fläche der Stabköpfe erfasst wird, ohne dass der Steg eingeklemmt wird. Mit einer Vorschubgeschwindigkeit von 50 mm/min wir der Schulterstab auf eine Vorspannung von <0,1 MPa gespannt. Dann erfolgt die Aufnahme der Kraft-Längenänderungskurve mit einer Vorschubgeschwindigkeit von 50 mm/min.

Auswertung: Folgende Werte sind der Messung zu entnehmen: Bruchkraft in [N/mm²], Bruchdehnung in [%] und E-Modul bei 100% Dehnung in [N/mm²].

### Messung der Haftungseigenschaften:

Zur Beurteilung der Haftungseigenschaften der Zusammensetzungen auf einem Substrat wird wie folgt vorgegangen:

Nicht-saugende Untergründe werden vor der Applikation der Zusammensetzung mit einem Lösemittelgemisch aus Aceton und Isopropanol gereinigt (Mischungsverhältnis 1:3). Anschließend werden jeweils 3 Raupen (ca. 1,5 cm breit und ca. 3 mm dick) der zu untersuchenden Masse auf dem zu prüfenden Substrat appliziert. Die Haftung der Masse wird jeweils nach 2 Wochen Vorlagerung bei Normklima (23 ± 2°C) und (50 ± 5 % rel. Luftfeuchtigkeit) beurteilt. Dazu wird je eine Raupe mit einem Messer ca. 1 cm vom Substrat gelöst. Durch Ziehen an diesem Stück im Winkel von ca. 90° wird versucht, die Raupe komplett abzulösen. Beurteilt wird der Bruch zwischen Dichtmasse und Substrat. Dabei wird unterschieden zwischen:
Af = Adhäsionsfehler
Cf = Kohäsionsfehler

Zusätzliche Unterscheidung nach Noten von 1 bis 3: 1 = "deutliche Haftung" bis 3 = "keinerlei Haftung"

## Patentansprüche

1. Silan der Formel (1),
Si(R¹)ₘ(R²)ₙ(R³)₄₋₍ₘ₊ₙ₎ (1)
wobei
jedes R¹ unabhängig steht für:
einen substituierten oder unsubstituierten Alkyl-, Alkenyl- oder Alkinylrest;
einen substituierten oder unsubstituierten cycloaliphatischen Rest oder Arylrest;
einen substituierten oder unsubstituierten heteroalicyclischen Rest oder Heteroarylrest;
jedes R² unabhängig steht für einen Rest der allgemeinen Formel (2): 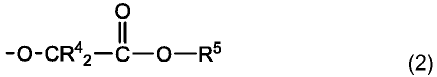 wobei
jedes R⁴ unabhängig steht für:
Wasserstoff; oder
einen substituierten oder unsubstituierten Alkyl-, Alkenyl- oder Alkinylrest;
R⁵ steht für:
einen substituierten oder unsubstituierten Alkyl-, Alkenyl- oder Alkinylrest;
für einen Rest der allgemeinen Formel (2-2):
-OR⁵⁻² (2-2)
wobei
R⁵⁻² steht für:
einen substituierten oder unsubstituierten Alkyl-, Alkenyl- oder Alkinylrest;
oder für einen Rest der allgemeinen Formel (2-3): 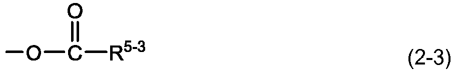 wobei
R⁵⁻³ steht für:
einen substituierten oder unsubstituierten Alkyl-, Alkenyl- oder Alkinylrest;
jedes R³ unabhängig steht für einen Rest der allgemeinen Formel (3): 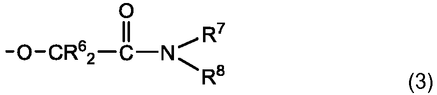 wobei
jedes R⁶ unabhängig steht für:
Wasserstoff oder
einen substituierten oder unsubstituierten Alkyl-, Alkenyl- oder Alkinylrest;
R⁷ steht für:
Wasserstoff,
einen substituierten oder unsubstituierten Alkyl-, Alkenyl- oder Alkinylrest,
einen substituierten oder unsubstituierten cycloaliphatischen Rest oder Arylrest,
für R⁸, oder
einen Rest -(CH₂)_{q}-COOR⁹, wobei q eine ganze Zahl von 2 bis 10, insbesondere 2 ist und R⁹ für einen substituierten oder unsubstituierten Alkyl-, Alkenyl- oder Alkinylrest, oder einen substituierten oder unsubstituierten cycloaliphatischen Rest oder Arylrest steht;
R⁸ steht für einen Rest der allgemeinen Formel (4):
-R¹⁰-SiR¹¹ₒ(OR¹²)₃₋ₒ (4)
wobei
R¹⁰ steht für:
einen, gegebenenfalls durch ein Heteroatom unterbrochenen Alkylenrest;
jedes R¹¹ unabhängig steht für:
einen substituierten oder unsubstituierten Alkyl-, Alkenyl- oder Alkinylrest;
jedes R¹² unabhängig steht für:
einen substituierten oder unsubstituierten Alkyl-, Alkenyl- oder Alkinylrest,
einen Acylrest;
oder einen Rest der Formel (5): 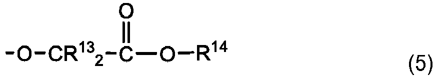
wobei
jedes R¹³ unabhängig steht für:
Wasserstoff; oder
einen substituierten oder unsubstituierten Alkyl-, Alkenyl- oder Alkinylrest;
R¹⁴ steht für:
einen substituierten oder unsubstituierten Alkyl-, Alkenyl- oder Alkinylrest; und
o unabhängig für 0, 1 oder 2 steht, und
m unabhängig für 0 oder 1 und n unabhängig für 0, 1, 2 oder 3 steht, wobei die Summe n + m maximal 3 beträgt.

2. Silan gemäß Anspruch 1, **dadurch gekennzeichnet, dass** jedes R¹ unabhängig voneinander für einen Alkylrest mit 1 bis 10 Kohlenstoffatomen, insbesondere Methyl, Ethyl, Propyl oder Isopropyl, oder für einen Alkenylrest mit 2 bis 10 Kohlenstoffatomen, insbesondere Vinyl oder Allyl, steht.

3. Silan gemäß mindestens einem der Ansprüche 1 bis 2, **dadurch gekennzeichnet, dass** jedes R² unabhängig voneinander für einen Rest der Formel (2) steht, wobei einer der Reste R⁴ für Wasserstoff und der zweite der Reste R⁴ für Wasserstoff oder einen substituierten oder unsubstituierten Alkylrest mit 1 bis 10 Kohlenstoffatomen, insbesondere Methyl, steht und/oder R⁵ für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl, steht.

4. Silan gemäß Anspruch 1, **dadurch gekennzeichnet, dass** jedes R² unabhängig voneinander für einen Rest der Formel (2-2) steht, wobei R⁵⁻² für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl, steht.

5. Silan gemäß mindestens einem der Ansprüche 1 bis 4, **dadurch gekennzeichnet, dass** jedes R³ unabhängig voneinander für einen Rest der Formel (3) steht, wobei einer der Reste R⁶ für Wasserstoff und der zweite der Reste R⁶ für Wasserstoff oder einen substituierten oder unsubstituierten Alkylrest mit 1 bis 10 Kohlenstoffatomen, insbesondere Methyl, steht.

6. Silan gemäß mindestens einem der Ansprüche 1 bis 5, **dadurch gekennzeichnet, dass** jedes R³ unabhängig voneinander für einen Rest der Formel (3) steht, wobei R⁷ für Wasserstoff, einen substituierten oder unsubstituierten Alkylrest mit 1 bis 10 Kohlenstoffatomen, insbesondere mit 1 bis 4 Kohlenstoffatomen, oder R⁸ steht.

7. Silan gemäß mindestens einem der Ansprüche 1 bis 6, **dadurch gekennzeichnet, dass** jedes R³ unabhängig voneinander für einen Rest der Formel (3) steht, wobei R⁸ für einen Rest der Formel (4) steht, wobei R¹⁰ ein Alkylenrest der Formel -(CH₂)ₚ- ist, wobei p eine ganze Zahl von 1 bis 6, insbesondere 3 ist.

8. Silan gemäß mindestens einem der Ansprüche 1 bis 7, **dadurch gekennzeichnet, dass** jedes R³ unabhängig voneinander für einen Rest der Formel (3) steht, wobei R⁸ für einen Rest der Formel (4) steht, wobei jedes R¹¹ unabhängig voneinander für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl, und/oder jedes R¹² unabhängig voneinander für einen substituierten oder unsubstituierten Alkylrest mit 1 bis 10 Kohlenstoffatomen, insbesondere mit 1 bis 4 Kohlenstoffatomen, besonders bevorzugt Methyl oder Ethyl, steht.

9. Silan gemäß mindestens einem der Ansprüche 1 bis 8, **dadurch gekennzeichnet, dass** jedes R³ unabhängig voneinander für einen Rest der Formel (3) steht, wobei R⁸ für einen Rest der Formel (4) steht, wobei o für 0 oder 1, vorzugsweise 0 steht.

10. Silan gemäß mindestens einem der Ansprüche 1 bis 9, **dadurch gekennzeichnet, dass** m für 0 oder 1, vorzugsweise 1, und/oder n für 0, 1 oder 2, vorzugsweise 2, steht.

11. Verfahren zur Herstellung eines Silans gemäß mindestens einem der Ansprüche 1 bis 10, **dadurch gekennzeichnet, dass** ein Silan der Formel (5),
Si(R¹)ₘ(R²)₄₋ₘ (5)
wobei
m, sowie jedes R¹ und jedes R², jeweils unabhängig voneinander, die in Anspruch 1 angegebenen Bedeutungen haben,
mit mindestens einer Aminosilanverbindung der allgemeinen Formel (6):
(HR⁷N)-R¹⁰-SiR¹¹ₒ(OR¹²)₃₋ₒ (6)
wobei
o, R⁷, R¹⁰, sowie jedes R¹¹ und jedes R¹², jeweils unabhängig voneinander, die in Anspruch 1 angegebenen Bedeutungen haben,
miteinander umgesetzt werden.

12. Verfahren nach Anspruch 11, **dadurch gekennzeichnet, dass** das Molverhältnis von Silan der Formel (5) zur Aminosilanverbindung der allgemeinen Formel (6) bei 2 : 1 bis 30 : 1, vorzugsweise bei 4 : 1 bis 15 : 1 liegt.

13. Verfahren nach mindestens einem der Ansprüche 11 bis 12, **dadurch gekennzeichnet, dass** Silan der Formel (5) und Aminosilanverbindung der allgemeinen Formel (6) bei Normaldruck (1 bar) und einer Temperatur von 40 bis 80°C, vorzugsweise 50 bis 80°C, insbesondere bevorzugt 60 bis 80°C, für mindestens 10 Minuten, vorzugsweise mindestens 30 Minuten, besonders bevorzugt mindestens 60 Minuten, gerührt werden.

14. Härtbare Zusammensetzung enthaltend mindestens ein Silan gemäß mindestens einem der Ansprüche 1 bis 10 und mindestens ein Polyorganosiloxan, wobei das Polyorganosiloxan mindestens eine, an ein Siliziumatom gebundene, Hydroxygruppe aufweist.

15. Härtbare Zusammensetzung gemäß Anspruch 14, **dadurch gekennzeichnet, dass** sie weiterhin mindestens einen Härtungskatalysator, insbesondere eine Zinnverbindung, enthält.

## Claims

1. A silane of formula (1),
Si(R¹)ₘ(R²)ₙ(R³)₄₋₍ₘ₊ₙ₎ (1)
wherein
each R¹ independently represents:
a substituted or unsubstituted alkyl, alkenyl or alkynyl functional group;
a substituted or unsubstituted cycloaliphatic functional group or aryl functional group; a substituted or unsubstituted heteroalicyclic functional group or heteroaryl functional group;
each R² independently represents a functional group of the general formula (2): 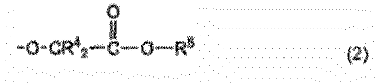 wherein
each R⁴ independently represents:
hydrogen; or
a substituted or unsubstituted alkyl, alkenyl or alkynyl functional group;
R⁵ represents:
a substituted or unsubstituted alkyl, alkenyl or alkynyl functional group;
a functional group of the general formula (2-2):
-OR⁵⁻² (2-2)
wherein
R⁵⁻² represents:
a substituted or unsubstituted alkyl, alkenyl or alkynyl functional group;
or a functional group of the general formula (2-3): 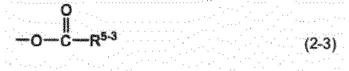 wherein
R⁵⁻³ represents:
a substituted or unsubstituted alkyl, alkenyl or alkynyl functional group;
each R³ independently represents a functional group of general formula (3): 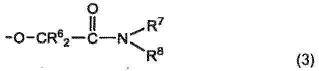 wherein
each R⁶ independently represents:
hydrogen or a substituted or unsubstituted alkyl, alkenyl or alkynyl functional group;
R⁷ represents:
hydrogen, a substituted or unsubstituted alkyl, alkenyl or alkynyl functional group; a substituted or unsubstituted cycloaliphatic functional group or aryl functional group, R⁸, or a -(CH₂)_{q}-COOR⁹ functional group, wherein q is an integer from 2 to 10, in particular 2, and R⁹ represents a substituted or unsubstituted alkyl, alkenyl or alkynyl functional group or a substituted or unsubstituted cycloaliphatic functional group or aryl functional group;
R⁸ represents a functional group of general formula (4):
-R¹⁰-SiR¹¹ₒ(OR¹²)₃₋ₒ (4)
wherein
R¹⁰ represents:
an alkylene functional group optionally interrupted by a heteroatom;
each R¹¹ independently represents:
a substituted or unsubstituted alkyl, alkenyl or alkynyl functional group;
each R¹² independently represents:
a substituted or unsubstituted alkyl, alkenyl or alkynyl functional group, an acyl functional group; or a functional group of formula (5): 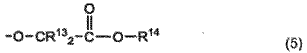 wherein
each R¹³ independently represents:
hydrogen; or a substituted or unsubstituted alkyl, alkenyl or alkynyl functional group;
R¹⁴ represents:
a substituted or unsubstituted alkyl, alkenyl or alkynyl functional group; and o independently represents 0, 1, or 2, and m independently represents 0 or 1 and n independently represents 0, 1, 2 or 3, wherein the sum n + m is a maximum of 3.

2. The silane according to claim 1, **characterized in that** each R¹ independently represents an alkyl functional group having 1 to 10 carbon atoms, in particular methyl, ethyl, propyl or isopropyl, or an alkenyl functional group having 2 to 10 carbon atoms, in particular vinyl or allyl.

3. The silane according to at least one of claims 1 to 2, **characterized in that** each R² independently represents a functional group of formula (2), where one of the R⁴ functional groups represents hydrogen and the second of the R⁴ functional groups represents hydrogen or a substituted or unsubstituted alkyl functional group having 1 to 10 carbon atoms, in particular methyl, and/or R⁵ represents a substituted or unsubstituted alkyl functional group having 1 to 10 carbon atoms, in particular having 1 to 4 carbon atoms, particularly preferably methyl or ethyl.

4. The silane according to claim 1, **characterized in that** each R² independently represents a functional group of formula (2-2), where R⁵⁻² represents a substituted or unsubstituted alkyl functional group having 1 to 10 carbon atoms, in particular having 1 to 4 carbon atoms, particularly preferably methyl or ethyl.

5. The silane according to at least one of claims 1 to 4, **characterized in that** each R³ independently represents a functional group of formula (3), where one of the R⁶ functional groups represents hydrogen and the second of the R⁶ functional groups represents hydrogen or a substituted or unsubstituted alkyl functional group having 1 to 10 carbon atoms, in particular methyl.

6. The silane according to at least one of claims 1 to 5, **characterized in that** each R³ independently represents a functional group of formula (3), where R⁷ represents hydrogen, a substituted or unsubstituted alkyl functional group having 1 to 10 carbon atoms, in particular having 1 to 4 carbon atoms, or R⁸.

7. The silane according to at least one of claims 1 to 6, **characterized in that** each R³ independently represents a functional group of formula (3), where R⁸ represents a functional group of formula (4), where R¹⁰ is an alkylene functional group of formula -(CH₂)ₚ-, where p is an integer of 1 to 6, in particular 3.

8. The silane according to at least one of claims 1 to 7, **characterized in that** each R³ independently represents a functional group of formula (3), where R⁸ represents a functional group of formula (4), where each R¹¹ independently represents a substituted or unsubstituted alkyl functional group having 1 to 10 carbon atoms, in particular having 1 to 4 carbon atoms, particularly preferably methyl or ethyl, and/or each R¹² independently represents a substituted or unsubstituted alkyl functional group having 1 to 10 carbon atoms, in particular having 1 to 4 carbon atoms, particularly preferably methyl or ethyl.

9. The silane according to at least one of claims 1 to 8, **characterized in that** each R³ independently represents a functional group of formula (3), where R⁸ represents a functional group of formula (4), where o represents 0 or 1, preferably 0.

10. The silane according to at least one of claims 1 to 9, **characterized in that** m represents 0 or 1, preferably 1, and/or n represents 0, 1 or 2, preferably 2.

11. A method for producing a silane according to at least one of claims 1 to 10, **characterized in that** a silane of formula (5),
Si(R¹)ₘ(R²)₄₋ₘ (5)
where
m, as well as each R¹ and each R², in each case independently, have the meanings specified in claim 1, is reacted together with at least one aminosilane compound of general formula (6):
(HR⁷N)-R¹⁰-SiR¹¹ₒ(OR¹²)₃₋ₒ (6)
where
o, R⁷, R¹⁰, as well as each R¹¹ and each R¹², in each case independently, have the meanings specified in claim 1.

12. The method according to claim 11, **characterized in that** the molar ratio of silane of formula (5) to the aminosilane compound of general formula (6) is 2:1 to 30:1, preferably 4:1 to 15:1.

13. The method according to at least one of claims 11 to 12, **characterized in that** silane of formula (5) and aminosilane compound of general formula (6) are stirred for at least 10 minutes, preferably at least 30 minutes, particularly preferably at least 60 minutes, at normal pressure (1 bar) and a temperature of from 40 to 80 °C, preferably 50 to 80 °C, particularly preferably 60 to 80 °C.

14. A curable composition containing at least one silane according to at least one of claims 1 to 10 and at least one polyorganosiloxane, wherein the polyorganosiloxane has at least one hydroxy group bonded to a silicon atom.

15. The curable composition according to claim 14, **characterized in that** it additionally contains at least one curing catalyst, in particular a tin compound.

## Revendications

1. Silane de formule (1),
Si(R¹)ₘ(R²)ₙ(R³)₄₋₍ₘ₊ₙ₎ (1)
dans laquelle
chaque R¹ représente indépendamment :
un radical alkyle, alcényle ou alcynyle substitué ou non substitué ; un radical cycloaliphatique ou un radical aryle substitué ou non substitué ; un radical hétéroalicyclique ou un radical hétéroaryle substitué ou non substitué ;
chaque R² représente indépendamment un radical de formule générale (2) : 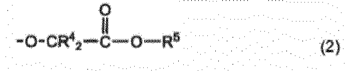 dans laquelle
chaque R⁴ représente indépendamment :
de l'hydrogène ; ou
un radical alkyle, alcényle ou alcynyle substitué ou non substitué ;
R⁵ représente :
un radical alkyle, alcényle ou alcynyle substitué ou non substitué ;
un radical de formule générale (2-2) :
-OR⁵⁻² (2-2)
dans laquelle
R⁵⁻² représente :
un radical alkyle, alcényle ou alcynyle substitué ou non substitué ;
ou un radical de formule générale (2-3) : 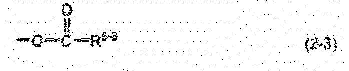 dans laquelle
R⁵⁻³ représente :
un radical alkyle, alcényle ou alcynyle substitué ou non substitué ;
chaque R³ représente indépendamment un radical de formule générale (3) : 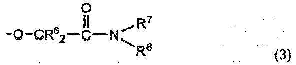 dans laquelle
chaque R⁶ représente indépendamment :
de l'hydrogène ou un radical alkyle, alcényle ou alcynyle substitué ou non substitué ;
R⁷ représente :
de l'hydrogène, un radical alkyle, alcényle ou alcynyle substitué ou non substitué, un radical cycloaliphatique ou un radical aryle substitué ou non substitué, pour R⁸, ou un radical -(CH₂)_{q}-COOR⁹, dans lequel q est un nombre entier situé dans la plage allant de 2 à 10, en particulier 2 ; et R⁹ représente un radical alkyle, alcényle ou alcynyle substitué ou non substitué, ou un radical cycloaliphatique ou un radical aryle substitué ou non substitué ;
R⁸ représente un radical de formule générale (4) :
-R¹⁰-SiR¹¹ₒ(OR¹²)₃₋ₒ (4)
dans laquelle
R¹⁰ représente :
un radical alkylène éventuellement interrompu par un hétéroatome ;
chaque R¹¹ représente indépendamment :
un radical alkyle, alcényle ou alcynyle substitué ou non substitué ;
chaque R¹² représente indépendamment :
un radical alkyle, alcényle ou alcynyle substitué ou non substitué, un radical acyle ; ou un radical de formule (5) : 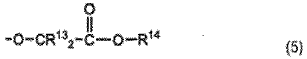 dans laquelle
chaque R¹³ représente indépendamment :
de l'hydrogène ; ou un radical alkyle, alcényle ou alcynyle substitué ou non substitué ;
R¹⁴ représente :
un radical alkyle, alcényle ou alcynyle substitué ou non substitué ; o représente indépendamment 0, 1 ou 2 ; m représente indépendamment 0 ou 1 et n représente indépendamment 0, 1, 2 ou 3, la somme de n + m n'excédant pas 3.

2. Silane selon la revendication 1, **caractérisé en ce que** chaque R¹ représente indépendamment des autres un radical alkyle ayant de 1 à 10 atomes de carbone, en particulier méthyle, éthyle, propyle ou isopropyle, ou un radical alcényle ayant de 2 à 10 atomes de carbone, en particulier vinyle ou allyle.

3. Silane selon au moins l'une des revendications 1 à 2, **caractérisé en ce que** chaque R² représente indépendamment des autres un radical de formule (2), dans lequel l'un des radicaux R⁴ représente de l'hydrogène et le second des radicaux R⁴ représente de l'hydrogène ou un radical alkyle substitué ou non substitué ayant de 1 à 10 atomes de carbone, en particulier méthyle, et/ou R⁵ représente un radical alkyle substitué ou non substitué ayant de 1 à 10 atomes de carbone, en particulier ayant de 1 à 4 atomes de carbone, et de façon particulièrement préférée méthyle ou éthyle.

4. Silane selon la revendication 1, **caractérisé en ce que** chaque R² représente indépendamment des autres un radical de formule (2-2), dans laquelle R⁵⁻² représente un radical alkyle substitué ou non substitué ayant de 1 à 10 atomes de carbone, en particulier ayant de 1 à 4 atomes de carbone, et de façon particulièrement préférée méthyle ou éthyle.

5. Silane selon au moins l'une des revendications 1 à 4, **caractérisé en ce que** chaque R³ représente indépendamment des autres un radical de formule (3), dans laquelle l'un des radicaux R⁶ représente de l'hydrogène et le second des radicaux R⁶ représente de l'hydrogène ou un radical alkyle substitué ou non substitué ayant de 1 à 10 atomes de carbone, en particulier méthyle.

6. Silane selon au moins l'une des revendications 1 à 5, **caractérisé en ce que** chaque R³ représente indépendamment des autres un radical de formule (3), dans laquelle R⁷ représente de l'hydrogène, un radical alkyle substitué ou non substitué ayant de 1 à 10 atomes de carbone, en particulier ayant de 1 à 4 atomes de carbone, ou R⁸.

7. Silane selon au moins l'une des revendications 1 à 6, **caractérisé en ce que** chaque R³ représente indépendamment des autres un radical de formule (3), dans laquelle R⁸ représente un radical de formule (4), dans laquelle R¹⁰ est un radical alkylène de formule -(CH₂)ₚ-, dans laquelle p est un nombre entier situé dans la plage allant de 1 à 6, en particulier 3.

8. Silane selon au moins l'une des revendications 1 à 7, **caractérisé en ce que** chaque R³ représente indépendamment des autres un radical de formule (3), dans laquelle R⁸ représente un radical de formule (4), dans laquelle chaque R¹¹ représente indépendamment des autres un radical alkyle substitué ou non substitué ayant de 1 à 10 atomes de carbone, en particulier ayant de 1 à 4 atomes de carbone, et de façon particulièrement préférée méthyle ou éthyle, et/ou chaque R¹² représente indépendamment des autres un radical alkyle substitué ou non substitué ayant de 1 à 10 atomes de carbone, en particulier ayant de 1 à 4 atomes de carbone, et de façon particulièrement préférée méthyle ou éthyle.

9. Silane selon au moins l'une des revendications 1 à 8, **caractérisé en ce que** chaque R³ représente indépendamment des autres un radical de formule (3), dans laquelle R⁸ représente un radical de formule (4), dans laquelle o représente 0 ou 1, de préférence 0.

10. Silane selon au moins l'une des revendications 1 à 9, **caractérisé en ce que** m représente 0 ou 1, de préférence 1, et/ou n représente 0, 1 ou 2, de préférence 2.

11. Procédé de préparation d'un silane selon au moins l'une des revendications 1 à 10, **caractérisé en ce qu'**on met à réagir ensemble un silane de formule (5),
Si(R¹)ₘ(R²)₄₋ₘ (5)
dans laquelle
m, ainsi que chaque R¹ et chaque R², dans chaque cas indépendamment des autres, ont les significations indiquées dans la revendication 1, avec au moins un composé d'aminosilane de formule générale (6) :
(HR⁷N)-R¹⁰-SiR¹¹ₒ(OR¹²)₃₋ₒ (6)
dans laquelle
o, R⁷, R¹⁰ ainsi que chaque R¹¹ et chaque R¹², dans chaque cas indépendamment des autres, ont les significations indiquées dans la revendication 1.

12. Procédé selon la revendication 11, **caractérisé en ce que** le rapport en moles du silane de formule (5) au composé d'aminosilane de formule générale (6) se situe dans la plage allant de 2:1 à 30:1, et de préférence de 4:1 à 15:1.

13. Procédé selon au moins l'une des revendications 11 à 12, **caractérisé en ce que** le silane de formule (5) et le composé d'aminosilane de formule générale (6) sont agités à la pression standard (1 bar) et à une température située dans la plage allant de 40 à 80 °C, de préférence de 50 à 80 °C, et de façon particulièrement préférée de 60 à 80 °C, pendant au moins 10 minutes, de préférence au moins 30 minutes, et de façon particulièrement préférée au moins 60 minutes.

14. Composition durcissable contenant au moins un silane selon au moins l'une des revendications 1 à 10 et au moins un polyorganosiloxane, le polyorganosiloxane présentant au moins un groupe hydroxyle lié à un atome de silicium.

15. Composition durcissable selon la revendication 14, **caractérisée en ce qu'**elle contient en outre au moins un catalyseur de durcissement, en particulier un composé d'étain.
